(19) Europäisches Patentamt / European Patent Office / Office européen des brevets

(11) **EP 2 467 348 B1**

(12) **EUROPEAN PATENT SPECIFICATION**

(45) Date of publication and mention of the grant of the patent:
**19.12.2018 Bulletin 2018/51**

(51) Int Cl.:
*C04B 24/38* *(2006.01)*    *C04B 28/02* *(2006.01)*
*C04B 28/14* *(2006.01)*    *C04B 40/00* *(2006.01)*
*C08B 30/14* *(2006.01)*    *C08L 3/02* *(2006.01)*

(21) Application number: **10737768.1**

(22) Date of filing: **14.07.2010**

(86) International application number:
**PCT/EP2010/004293**

(87) International publication number:
**WO 2011/020528 (24.02.2011 Gazette 2011/08)**

(54) **PLASTERBOARD PANELS AND METHODS OF MAKING THE SAME**

Gipsplatten und Verfahren zu deren Herstellung

Panneaux en placoplâtre et leurs procédés de fabrication

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **19.08.2009 EP 09010662**

(43) Date of publication of application:
**27.06.2012 Bulletin 2012/26**

(73) Proprietor: **Cargill, Incorporated Wayzata, MN 55391 (US)**

(72) Inventors:
• **BILTRESSE, Stéphane
  B-1040 Etterbeek (BE)**
• **BREGOLA, Massimo
  I-45030 Castelmassa (RO) (IT)**
• **FORINI, Andrea
  I-37053 Cerea (VR) (IT)**

(74) Representative: **Dottridge, Cass A.C. et al
Cargill R&D Centre Europe BVBA
Bedrijvenlaan 9
2800 Mechelen (BE)**

(56) References cited:
WO-A1-01/60867      WO-A1-96/22311
WO-A1-97/30091      WO-A1-99/08979
WO-A1-2007/113111   US-A- 2 044 401
US-A- 4 667 654     US-A- 6 066 353
US-A1- 2005 223 949  US-A1- 2007 284 027

## Description

### Field of the Invention

The present invention relates to plasterboard panels, such as gypsum-based panels, and to methods of making such panels.

### Background of the Invention

Plasterboard panels are used in the building industry for interior wall and ceiling construction. They are relatively cheap to produce and install compared to more traditional building materials and methods. Typically, they consist of a core material sandwiched between two sheets of liner material (e.g. paper) but may also be produced with only a single sheet of liner material or, indeed, none at all. Alternatively, a webbing may be incorporated directly into the core material. In any event, the composition of the core material will be instrumental in determining functional properties of the resulting panel (e.g. strength, water-resistance, sound and heat insulation, hardness, etc.).

Plasterboard panels are typically formed in a continuous process in which a slurry is provided by mixing dry ingredients with water. In the case of double-faced panels as described above, the slurry (which will eventually form the core material of the plasterboard) is then deposited and sandwiched between two sheets of liner paper. The resulting product is pressed to the required thickness by a forming plate and allowed to set. The panel may then be cut to size and is dried to remove any excess water.

US2005/223949, US2007/284027 and US2044401 disclose plasterboard comprising a starch material (e.g. on acid treated starch); a pyrodextrin and a dry-milled, acid modified starch, respectively.

The dry ingredients of the slurry will normally include calcined gypsum, a bonding agent to ensure adhesion between the core material and the liner material, and one or more additives such as foaming agents, fire retardants, biocides, etc. The bonding agent typically consists of starch which is added raw (uncooked) to the plaster slurry. During the manufacturing process, the starch is cooked (or "pasted"), resulting in an increase in viscosity and an increase in water holding capacity (also known as "water retention"). These effects together are detected as an improvement in the board's peeling force (i.e. in adhesion between core and liner materials).

Unfortunately, a too great increase in viscosity will also affect migration ability and can, in turn, have a detrimental effect on adhesion. A starch's water holding capacity plays a key role in the proper growth of gypsum crystals. This is most critical at the inter-phase between core material and liner material as the crystals interlock with the paper fibres to enhance adhesion. As such, a high peak viscosity which results in poor migration ability will also lead to reduced adhesion. A compromise between mobility (low viscosity) and water retention (generally improved with high viscosity) is therefore needed to optimise bonding. To this end, cold water soluble starches, such as pre-gelatinised starches or soluble dextrins, have been tested as alternatives to the typical native starch bonding agents used in the manufacture of plasterboard. Although they have the advantage of good mobility, they have never been adopted for full-scale industrial use because their solubility negatively affects the rheology of the gypsum slurry. What's more, they do not exhibit the increase in viscosity and water retention during drying that is required for good adhesion.

Acid-thinned starches have also been suggested as possible alternatives to native starches. Compared to native starches, acid-thinned starches exhibit a reduced peak viscosity during the pasting process and therefore better (faster) migration during gelatinisation. Acid-thinned starches are therefore more efficient than un-modified starches in this respect. However, because of their reduced viscosity, they also lead to lower water retention.

Thus, despite efforts in the art, a bonding agent which combines (1) very low solubility in cold water, (2) a low peak viscosity and (3) high water retention after pasting remains elusive. Solutions proposed to date have tended to optimise one feature (e.g. mobility) to the detriment of others (e.g. water retention) and the need for a solution which optimises all three is still needed. The present invention addresses this need.

### Summary of the Invention

In a first aspect of the present invention, there is provided a bonding agent for use in the manufacture of plasterboard panels as defined in claim 1.

According to a further aspect of the present invention, there is provided a plasterboard panel comprising a core material and one or more sheets of strengthening material characterised in that the core material comprises a bonding agent as defined above.

According to another aspect of the present invention, there is provided a method of manufacturing a plasterboard panel comprising the steps of:

   a) mixing at least a plaster or gypsum material with water and a bonding agent to form a slurry;

b) shaping the slurry to form a board,
c) optionally incorporating one or more sheets of strengthening material into the board and/or lining it therewith on one or more surfaces; and
d) drying the board,

characterised in that the bonding agent is a bonding agent as defined above.

## Detailed description of the invention

The present invention provides a bonding agent for use in plasterboard production, and in particular for use in causing and/or improving the adhesion between the plasterboard's core material and its one or more liner sheets.

The term "plasterboard", as used herein, refers to all types of building panels used in the construction industry. They may also be referred to, in the art, as drywall panels, wallboards, ceiling boards or ceiling linings, cement-boards and gypsum boards. They will be characterised by a core material and, optionally, one or more sheets of strengthening material. The strengthening material will preferably be used to line the core material on one or both of its main surfaces but may also (or alternatively) be incorporated within the core material itself. The strengthening material will preferably consist of a paper material, the thickness and quality of which will readily be determined by a person skilled in the art. Alternatively, a webbing material may be used, especially if it is intended for it to be incorporated within the core material. According to some embodiments, the strengthening material may also include foils, felts, plastics or other sheet materials.

The composition of the core material will vary from one manufacturer to another and depending on the intended end-use of the panel. Its main constituent will typically be calcined gypsum, also known as gypsum plaster. It may also include one or more additives such as fibres (typically paper and/or fibreglass), plasticizers, foaming agents, setting-accelerators (such as potash), chelating agents (such as EDTA or starch), mildew- and/or fire-retardants (such as fibreglass or vermiculite), water-proofing agents (such as wax emulsions for lower water absorption), and so on. A skilled person will be able to determine the necessary components of the core material based on his experience and on standard practice in the industry.

In any event, core materials used in accordance with the present invention will include a specific bonding agent. In particular, the bonding agent according to claim 1 will comprise a starch material characterised in that it has (i) a cold slurry viscosity of no more than 250 mPa.s, preferably of no more than 200 mPa.s, more preferably of no more than 150 mPa.s and most preferably of no more than 100 mPa.s; (ii) a peak viscosity of no more than 600 Brabender Units (BUs), preferably of no more than 400 BUs, more preferably of no more than 200 BUs, and most preferably of no more than 100 BUs; and (iii) a water retention value of no more than 90 $g/m^2$, preferably of no more than 80 $g/m^2$, more preferably of no more than 70 $g/m^2$. According to one particular embodiment, the starch material will have a cold slurry viscosity of between 100 and 150 mPa.s (especially of about 125 mPa.s), a peak viscosity of between 100 and 200 BUs (especially of about 160 BUs), and a water retention value of between 60 and 80 $g/m^2$ (especially of about 70 $g/m^2$). Each of these values is measured according to Methods 1 to 3, respectively, as set out below. In particular, it should be noted that water retention value is measured in terms of water release and a lower value therefore translates into better water retention.

According to the invention the starch material of the present invention is a thermally modified starch, advantageously obtained by dry or semi-dry modification.

The core material will typically comprise up to 5% of the bonding agent. Advantageously, it will comprise between 0.1% and 5%, in particular between 0.1 and 1%, by weight (based on total dry weight) of the bonding agent. The bonding agent, in turn, comprises the starch material in an amount of at least 50% by weight on a dry weight basis. Preferably, it will comprise at least 70% by weight of the starch material. According to certain embodiments, it may contain at least 80% by weight of the starch material. Alternatively, it may contain the starch material in an amount, by weight, of 85% or more, 90% or more, 95% or more, or even 99% or more. In one particular embodiment, the bonding agent will consist of the starch material. According to certain preferred embodiments, the bonding agent of the present invention will not comprise any acid-thinned or enzymatically degraded starches.

The bonding agent may comprise one or more additives. According to the invention it includes a flowing agent (such as silica-based products or phosphate salts). Surprisingly, it has been found that, to be effective, these flowing agents need only be added in an amount of 0.1% or less by weight (based on the total bonding agent dry weight). Thus, the bonding agents of the present invention will contain 0.1% or less by weight flowing agent, preferably 0.05% or less, even more preferably 0.01% or less. It may also comprise one or more hydrocolloids such as xanthan gum, guar gum, pectin and/or carrageenan. Preferably, the one or more hydrocolloids will be included in the bonding agent in an amount (based on total dry weight) of 5-10%.

In use, the bonding agent of the present invention will be mixed with the other so-called dry ingredients of the core material (e.g. calcined gypsum + optional additives) and a slurry will be formed by adding water. The slurry will then be shaped to a desired thickness. One or more sheets of strengthening material may be incorporated within the slurry and/or used to line it on one or more of its surfaces. The slurry, thus shaped, will then be allowed to dry. If necessary, once fully or partially dried, the boards may be finished (e.g. cut to size, coated, treated, etc.). Each of these steps may, advantageously, be performed in a continuous production process. This method is also a part of the present invention. According to one possible set-up, for the production of double-faced plasterboard panels (i.e. wherein the core material is sandwiched between two sheets of strengthening material), the slurry will be spread out, in a uniform manner, over a sheet of strengthening material (paper, for instance). A second sheet of strengthening material is then applied to the remaining, exposed surface of the slurry, effectively resulting in an enclosed envelope of slurry.

The drying step may be carried out in several phases. Thus, for example, it will be preferred to allow the shaped slurry first to set. This can be performed, on the production line, on a series of setting belts. Once the slurry has set (hardened), it can be cut into panels of a desired length and the drying step can then be completed, in a kiln, drying chamber or multilevel dryer for instance. The dried panels can then be finished (e.g. trimmed) and used. As will be apparent to a person skilled in the art, additional steps - such as printing or forming joints - may also be incorporated into the above process.

Surprisingly, it has been found that the above process can be performed at higher speeds when using a bonding agent in accordance with the present invention. Without wishing to be bound by theory, it is believed that this is thanks to better modulation of water retention. In addition, the resulting plasterboard panels have been found to have improved peel-resistance compared to panels produced with standard bonding agents at the same dosage rates (due to the improved mobility of the present starch materials during the drying step and their superior water holding capacity). In particular, this means that the bonding agent of the present invention is able to reduce or prevent peeling off and separation of strengthening materials from the core material of the plasterboard panel.

Preferred embodiments of the present invention have been described by way of illustration only. Modifications of these and further embodiments will be apparent to a person skilled in the art upon reading of this disclosure and will therefore be considered within the scope of the present invention. Further embodiments of the present invention will now be described in the following, non-limiting examples.

## Examples

### Method 1: Cold Slurry Viscosity (CSV)

Principle: a 44% dry basis slurry of the starch material to be tested is made at 25°C. When fully dispersed, a Brookfield viscosity measurement is made.

Method: 110g (dry basis) of the starch material to be tested is added to a normalised 400 ml glass beaker together with demineralised water to a total weight of 250g. The composition is then gently mixed with a stirring spatula, avoiding the inclusion of air bubbles. The viscosity of the obtained slurry is measured using a Brookfield RV viscometer, following the manufacturer's instructions.

Viscosity is measured in mPa.s with a number 2 spindle at 100 rpm (note: if the viscosity is above the scale maximum (400 mPa.s) the test can be repeated using a no. 3 spindle at 100 rpm).

### Method 2: Peak Viscosity

Principle: the starch material is dispersed in water and subjected to the Brabender Viscosity test, using a Viscograph E (Brabender) apparatus and following the manufacturer's instructions.

Method: for each starch material to be tested, 480 mg of starch slurry is prepared with 15% by weight of the starch material. The samples are prepared in 600 ml low-form glass or plastic beakers using demineralised water and mixed with a plastic rod or spoon. When homogeneity is achieved, the slurry is poured into the cup of the prepared Brabender viscometer, and the measuring head and sensor are inserted.

A 350 cmg cartridge and a revolution speed of 75 rpm are used. The sample is heated from 50°C (starting temperature S0) to 95°C (nominal temperature S1) at a heating rate of 1.5°C/min. The sample is then held at S1 for 30 min. It is then cooled again to 50°C (nominal temperature S2) at a cooling rate of 1.5°C/min using a refrigerated water bath set at 15°C.

Viscosity is measured in Brabender Units (BU). Four viscosities can be reported, namely: Peak viscosity: viscosity at the peak

Top viscosity: viscosity when the temperature reaches precisely 95°C
Hot paste viscosity: viscosity after precisely 30 min at 95°C
End viscosity: viscosity when the temperature reaches precisely 50°C.

**Method 3: Water Retention Value (WRV)**

Principle: water released by a composition during the application of pressure is absorbed by a filter paper. The increase in weight of the filter paper is then used to determine the quantity of water released by the composition and, therefore, its water holding capacity (or "water retention value").

Method: the starch material to be tested is batch cooked at 20% dry solids for 30 min at 96°C. 12 parts of the cooked starch (at 20% dry solids) are then added to 100 parts gypsum (such as Kemwhite gypsum - at 66% dry solids) together with water to form a slurry with a final dry solid content of 53% by weight. For unmodified starches, 100 parts gypsum (at 66%DS) and 5 parts of native starch (at 6% DS) were mixed with water to a final dry solids content of 46% by weight.

The method uses an AA-GWR Gravimetric Water Retention Meter (Model 250), following the manufacturer's instructions. A Blue Ribbon filter paper is weighed (weight 1: before test). The filter is then placed on the sample plate and covered with a Millipore filter (5 μm pore size), glossy side up. The cylinder is then placed on the plate with the sealing face upwards.

10ml of slurry (at 30°C) is filled into the cylinder with a syringe. The device is then closed with the plug and the pressure is switched on and adjusted to 1 bar. After two minutes, the pressure is stopped and the plug is removed. All components (plate, filters and cylinder) are then removed and the remaining slurry is poured away. The filter paper is finally weighed again (weight 2: after test) and the water retention value is calculated as follows:

$$\text{WRV [g/m²]} = (\text{weight 2} - \text{weight 1}) * 1250$$

Note: since this method measures water release, the lower the value the better the water holding capacity (or water retention).

**Example 1: Comparative Analysis of Different Starch Materials**

The following materials were tested for cold slurry viscosity, peak viscosity and water retention value following the methods (Methods 1-3) set out above:

A: C*Plus 05483 (a standard thinned starch)
B: C*Film 07311 (a dextrin)
C: C*Gel 03401 (a native starch)
D: C*Plus 07273 (a thermally modified starch)

The results of these tests are set out in Table 1, below (where a "+" indicates a positive result and a "-" indicates a negative result).

Table 1

| Measurement | | A | B | C | D |
|---|---|---|---|---|---|
| CSV | mPa.s | 129 (++) | 316 (-) | 81 (+++) | 126 (++) |
| Peak Viscosity | BU | 332 (+) | 45 (+++) | > 3000 (-) | 159 (++) |
| WRV | g/m$^2$ | 96 (-) | 275 (--) | 100 (*) | 70 (++) |
| *note: due to its high viscosity, it was very hard to measure water retention values for Sample C under the same conditions as the other samples. As such, water retention was measured at much lower dry solids for Sample C than for the other samples. It would be expected that, at a higher dry solid content, the water retention capacity of Sample C would also be higher (i.e. a lower WRV). | | | | | |

As is clear from this analysis, sample D, which is the sole sample according to the invention, is the most suitable material for use in accordance with the present invention, i.e. with (1) low slurry solubility, (2) a low peak viscosity and (3) high water retention simultaneously.

**Claims**

1. A bonding agent for use in the manufacture of plasterboard panels **characterised in that** it comprises a flowing agent and at least 50% by weight of a thermally modified starch having:

   (i) a cold slurry viscosity as determined according to Method 1 as described on pages 6 to 7 of the description; of no more than 250 mPa.s;
   (ii) a peak viscosity as determined according to Method 2 as described on page 7 of the description; of no more than 600 Brabender Units; and
   (iii) a water retention value as determined according to Method 3 as described on pages 7 to 8 of the description; of no more than 90 g/m$^2$.

2. An agent according to claim 1, **characterised in that** the starch material has:

   (i) a cold slurry viscosity of no more than 200 mPa.s;
   (ii) a peak viscosity of no more than 400 BUs; and
   (iii) a water retention value of no more than 80 g/m$^2$.

3. An agent according to claim 1 or 2, **characterised in that** the starch material has:

   (i) a cold slurry viscosity of no more than 150 mPa.s;
   (ii) a peak viscosity of no more than 200 BUs; and
   (iii) a water retention value of no more than 70 g/m$^2$.

4. An agent according to claim 1 or 2, **characterised in that** the starch material has:

   (i) a cold slurry viscosity of between 100 and 150 mPa.s;
   (ii) a peak viscosity of between 100 and 200 BUs; and
   (iii) a water retention value of between 60 and 80 g/m$^2$.

5. An agent according to any one of the preceding claims, **characterised in that** it does not include any acid-thinned starches.

6. An agent according to any one of the preceding claims, **characterised in that** it does not include any enzymatically degraded starches.

7. An agent according to any one of the preceding claims, **characterised in that** it further comprises one or more hydrocolloids.

8. A plasterboard panel comprising a core material and one or more sheets of strengthening material **characterised in that** the core material comprises a bonding agent according to any one of claims 1 to 7.

9. A method of manufacturing a plasterboard panel comprising the steps of:

   a) mixing at least a plaster or gypsum material with water and a bonding agent to form a slurry;
   b) shaping the slurry to form a board,
   c) optionally incorporating one or more sheets of strengthening material into the board and/or lining it therewith on one or more surfaces; and
   d) drying the board to dry,

   **characterised in that** the bonding agent is a bonding agent according to any one of claims 1 to 7.

**Patentansprüche**

1. Bindemittel zur Verwendung bei der Herstellung von Gipskartonplatten, **dadurch gekennzeichnet, dass** es ein Fließmittel und zumindest 50 Gew.-% einer thermisch modifizierten Stärke umfasst, die aufweist:

(i) eine Kaltschlammviskosität, bestimmt nach Verfahren 1, wie auf den Seiten 6 bis 7 der Beschreibung beschrieben;
von nicht mehr als 250 mPa·s;
(ii) eine Spitzenviskosität, bestimmt nach Verfahren 2, wie auf Seite 7 der Beschreibung beschrieben;
von nicht mehr als 600 Brabender-Einheiten; und
(iii) einen Wasserretentionwert, bestimmt nach Verfahren 3, wie auf den Seiten 7 bis 8 der Beschreibung beschrieben;
von nicht mehr als 90 g/m$^2$.

2. Mittel nach Anspruch 1, **dadurch gekennzeichnet, dass** das Stärkematerial aufweist:

(i) eine Kaltschlammviskosität von nicht mehr als 200 mPa·s;
(ii) eine Spitzenviskosität von nicht mehr als 400 BU; und
(iii) einen Wasserretentionwert von nicht mehr als 80 g/m$^2$.

3. Mittel nach Anspruch 1 oder 2, **dadurch gekennzeichnet, dass** das Stärkematerial aufweist:

(i) eine Kaltschlammviskosität von nicht mehr als 150 mPa·s;
(ii) eine Spitzenviskosität von nicht mehr als 200 BU; und
(iii) einen Wasserretentionwert von nicht mehr als 70 g/m$^2$.

4. Mittel nach Anspruch 1 oder 2, **dadurch gekennzeichnet, dass** das Stärkematerial aufweist:

(i) eine Kaltschlammviskosität zwischen 100 und 150 mPa·s;
(ii) eine Spitzenviskosität zwischen 100 und 200 BU; und
(iii) einen Wasserretentionwert zwischen 60 und 80 g/m$^2$.

5. Mittel nach einem der vorstehenden Ansprüche, **dadurch gekennzeichnet, dass** es keine säureverdünnten Stärken aufweist.

6. Mittel nach einem der vorstehenden Ansprüche, **dadurch gekennzeichnet, dass** es keine enzymatisch abgebauten Stärken aufweist.

7. Mittel nach einem der vorstehenden Ansprüche, **dadurch gekennzeichnet, dass** es weiter ein oder mehrere Hydrokolloide umfasst.

8. Gipskartonplatte, umfassend ein Kernmaterial und ein oder mehrere Folien aus Verstärkungsmaterial, **dadurch gekennzeichnet, dass** das Kernmaterial ein Bindemittel nach einem der Ansprüche 1 bis 7 umfasst.

9. Verfahren zum Herstellen einer Gipskartonplatte, umfassend die Schritte von:

a) Mischen zumindest eines Gips oder eines Gipsmaterials mit Wasser und eines Bindemittels, um einen Schlamm zu bilden;
b) Formen des Schlamms, um eine Platte zu bilden,
c) gegebenenfalls Einarbeiten von einer oder mehreren Folien aus Verstärkungsmaterial in die Platte und/oder Auskleiden dieser auf einer oder mehreren Oberflächen damit; und
d) Trockenen der Platte, um zu trocken,

**dadurch gekennzeichnet, dass** das Bindemittel ein Bindemittel nach einem der Ansprüche 1 bis 7 ist.

**Revendications**

1. Agent de collage pour une utilisation dans la fabrication de panneaux de placoplâtre **caractérisé en ce qu'**il comprend un agent d'écoulement et au moins 50 % en poids d'un amidon thermiquement modifié présentant :

(i) une viscosité en suspension à froid telle que déterminée selon le procédé 1 tel que décrit aux pages 6 à 7 de la description ;

d'au plus 250 mPa.s ;
(ii) une viscosité maximale telle que déterminée selon le procédé 2 tel que décrit à la page 7 de la description ;
d'au plus 600 unités Brabender ; et
(iii) une valeur de rétention d'eau telle que déterminée selon le procédé 3 tel que décrit aux pages 7 à 8 de la description ;
d'au plus 90 g/m$^2$.

2. Agent selon la revendication 1, **caractérisé en ce que** le matériau d'amidon présente :

(i) une viscosité en suspension à froid d'au plus 200 mPa.s ;
(ii) une viscosité maximale d'au plus 400 UB ; et
(iii) une valeur de rétention d'eau d'au plus 80 g/m$^2$.

3. Agent selon la revendication 1 ou 2, **caractérisé en ce que** le matériau d'amidon présente :

(i) une viscosité en suspension à froid d'au plus 150 mPa.s ;
(ii) une viscosité maximale d'au plus 200 UB ; et
(iii) une valeur de rétention d'eau d'au plus 70 g/m$^2$.

4. Agent selon la revendication 1 ou 2, **caractérisé en ce que** le matériau d'amidon présente :

(i) une viscosité en suspension à froid située entre 100 et 150 mPa.s ;
(ii) une viscosité maximale située entre 100 et 200 UB ; et
(iii) une valeur de rétention d'eau située entre 60 et 80 g/m$^2$.

5. Agent selon l'une quelconque des revendications précédentes, **caractérisé en ce qu'**il n'inclut aucun amidon fluidifié par acide.

6. Agent selon l'une quelconque des revendications précédentes, **caractérisé en ce qu'**il n'inclut aucun amidon dégradé par voie enzymatique.

7. Agent selon l'une quelconque des revendications précédentes, **caractérisé en ce qu'**il comprend en outre un ou plusieurs hydrocolloïdes.

8. Panneau de placoplâtre comprenant un matériau de coeur et une ou plusieurs feuilles de matériau de renforcement **caractérisé en ce que** le matériau de coeur comprend un agent de collage selon l'une quelconque des revendications 1 à 7.

9. Procédé de fabrication d'un panneau de placoplâtre comprenant les étapes suivantes :

a) le mélange d'au moins un matériau de plâtre ou de gypse avec de l'eau et un agent de collage pour former une suspension ;
b) la mise en forme de la suspension pour former un panneau,
c) facultativement l'incorporation d'une ou de plusieurs feuilles de matériau de renforcement dans le panneau et/ou son revêtement avec celles-ci sur une ou plusieurs surfaces ; et
d) le séchage du panneau à sec,

**caractérisé en ce que** l'agent de collage est un agent de collage selon l'une quelconque des revendications 1 à 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005223949 A
- US 2007284027 A
- US 2044401 A